# EUROPEAN PATENT SPECIFICATION

(11) **EP 1 404 552 B1**
(45) Date of publication and mention of the grant of the patent: **20.10.2004**
(21) Application number: 02751294.6
(22) Date of filing: 21.06.2002
(51) Int. Cl.: B60S 13/02

(54) **A TURNTABLE**
DREHSCHEIBE
PLAQUE TOURNANTE

(30) Priority: 07.07.2001 GB 0116689
(43) Date of publication of application: 07.04.2004
(73) Proprietor: Thomas, Philip John, Cowbridge, Vale of Glamorgan CF71 7QH (GB)
(72) Inventor: Thomas, Philip John, Cowbridge, Vale of Glamorgan CF71 7QH (GB)
(74) Representative: Jones, Ithel Rhys
(86) International application number: PCT/GB2002/002913
(87) International publication number: WO 2003/006282

(56) References cited:
- WO-A-98/30424
- DE-C- 536 243
- US-A- 3 854 404

## Description

The present invention relates to a turntable.

Turntables are used for various applications. One of the most common is rotation of vehicles, for example to prevent a car having to reverse out on to a busy road. A disadvantage of existing turntables is that they usually require a significant amount of engineering to install. If the surface on which the turntable is to be fitted is uneven then it must be levelled, otherwise the turntable will not rotate smoothly. Existing turntables with a central mounting are also prone to stress because the load tends to be concentrated on the central pivot. There is another type of existing turntable that has load-bearing wheels arranged around its perimeter, although this is a large structure and comparatively heavy.

Document WO98/30424 discloses a turntable comprising a base plate in one piece and a central bearing and further comprising an array of support bearings around its perimeter.

In one aspect the present invention provides a turntable with a flexible surface which can be easily rotated even on an uneven surface. Embodiments of the invention allow the weight of the load to be distributed widely throughout the turntable.

According to one aspect of the present invention there is provided a hub for placing on a surface, the hub having a substantially central axle and a plurality of load-bearing and friction-reducing components located under the hub for allowing the hub to rotate above the surface;
a platform formed of a plurality of segments extending radially from the hub, each said segment having an inner end edge substantially facing the hub, two sides each lying alongside an adjacent segment and an outer end edge remote from the hub, wherein each said inner end edge is flexibly connected to the hub or to an outer end edge of another said platform segment, and
loading-bearing and friction-reducing components located under some or all of the platform segments towards the outer end edges thereof for supporting the segments above the surface and allowing the platform to rotate above the surface.

Some or all of the platform segments may be flexibly connected to either or both adjacent segments, typically by means of hinges. Hinges may also be used to connect the segments to the hub.

Tracks for guiding wheels of a vehicle on the platform may be provided, with each track typically fitted on top of the platform on opposite sides of the central hub. The tracks are preferably fitted on the platform by means of a levelling mechanism. The levelling mechanism may comprise a flexible pivot for connecting the track to an elongate support, each end of the elongate support having a slot into which a member extending from the platform can be slidably fitted. The slot may be substantially horizontal and each slot may have a member extending from one of an adjacent pair of platform segments fitted within it. Thus, the platform segments may move horizontally with respect to each other.

The tracks may include brakes for holding the vehicle in position. Typically, the track is connected at its two ends to the perimeter of the platform and also substantially midway across the platform. The tracks can include stops for the vehicle to assist the driver in positioning the vehicle on the turntable.

The turntable may further be provided with a ramp for enabling vehicles to be loaded onto the platform. The ramp may depend from the outer edges of the turntable. Alternatively, the ramp can be a separate member, formed of one or more pieces, which is suitably placed around the platform.

A ring for surrounding the perimeter of the platform may be provided to strengthen the structure. The ring may be formed of a plurality of curved sections. The ring is normally concentric with the hub.

The turntable may include a member that extends below the lower surface of the hub radially outwards under a platform segment to help support the structure. The member may be a rod that allows the platform segment to pivot upon it.

The load bearing and friction reducing components are preferably wheels, but it will be understood that other types of mechanisms could be used, for example skids.

A load bearing and friction reducing component may be connected to a pair of adjacent platform segments by means of struts extending from the segments, at least one said strut including a slot through which a connection portion attached to the load bearing and friction reducing component can protrude. The slot may have a length greater than the length of the connection portion so that the struts and the platform segments can move relative to the connection portion. When wheels are used for the components, the connection portion can comprise an axle connected to the wheel.

In one embodiment each platform segment has two wheels, with one wheel being located towards each side of the outer end edge of the segment. In this case, the connection with the hub and the two wheels act as three-point support for distributing a load on the platform segment. In an alternative embodiment, some or all of the segments are connected to one or both adjacent segments. For example, a hinge may be used to connect a first segment with its adjacent segment and a wheel may be fitted on the hinge.

A substantially circular track or rail for guiding the wheels of the segment can be provided. A substantially circular track or rail for guiding the wheels of the hub may be provided.

A locking component may be present to prevent rotation of the turntable for safety or security reasons. A mechanism for rotating the turntable may be provided. The rotating mechanism may be driven by a motor or it may be arranged to be driven by the rotation of wheels of a vehicle on the turntable.

The axle of the hub of the turntable may comprise a central stub shaft. Slots in the turntable components may be fitted with wear-reducing devices such as wearing plates, cam followers, wearing blocks or rollers.

Whilst the invention has been described above, it extends to any inventive combination of the features set out above or in the following description.

The invention may be performed in various ways, and, by way of example only, preferred embodiments thereof will now be described, reference being made to the accompanying drawings, in which:-
Figure 1 shows a plan view of a first embodiment of the invention;
Figure 2 illustrates a sectional side view of the turntable of Figure 1;
Figure 3 is a sectional side view detailing the hub of the turntable;
Figure 4 is a perspective view showing the underside of one of the sections of the sections of the turntable;
Figure 5 is a perspective (partially transparent) view of a connection between the hub and a platform segment;
Figure 6 is a front view of one way in which a wheel can be connected to two adjacent platform segments;
Figure 7 is a sectional side view of one of the platform sections and a ramp;
Figure 8 is a sectional side view of a platform section fitted with a vehicle wheel track;
Figure 9 is a sectional side view detailing the connection between the vehicle wheel track and the platform section;
Figure 10 illustrates details of the ramps of Figure 5;
Figure 11 is a sectional side view of the ramp and part of the turntable, and
Figure 12 is a plan view of another embodiment of the turntable.

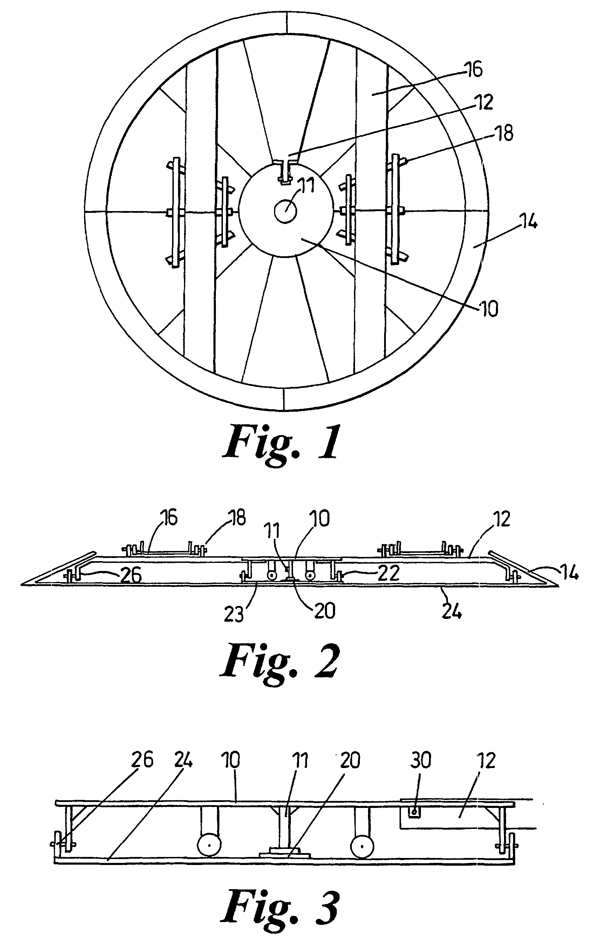

Referring to Figure 1, it can be seen that the turntable has a hub 10 formed of a circular plate which rotates about a perpendicular axle 11. A plurality of segments 12 extend radially from the hub 10 and form a substantially flat circular platform. Around the perimeter of the platform there is a ramp 14. Although ten segments are shown in Figure 1, two or more segments 12 can be used to form the circular platform. Having the platform formed from a number of segments means that it is easy to transport before assembly. Pairs of adjacent segments can be connected together by means of hook type fittings.

Two tracks 16 for receiving the wheels of a vehicle driven onto the turntable are fitted on top of the platform. The two tracks 16 are located on opposite sides of the hub 10 about half way between the centre of the turntable and its perimeter. The size and distance between the two tracks will be determined by the type of vehicle with which the platform is to be used and it is preferred that they are substantially balanced each side of the hub 10. Each track 16 is formed of two rectangular channels fitted end-to-end. One end of each channel is flexibly connected to a point about midway across the platform and the other ends of the two channels are flexibly connected at opposite ends near to the perimeter of the platform. The tracks 16 are fitted on the platform by a levelling mechanism 18.

Referring to Figure 2, it can be seen that the axle 11 is a stub shaft which can rotate in an axle base 20, but it will be appreciated that any type of axle could be used, e.g. a two bearing cartridge, a flanged bearing, bush housing or spicket. Wheels 22 are arranged evenly around the perimeter of the hub plate 10. The wheels 22 run over a substantially flat base plate 23. In the example of Figure 2, the hub base plate 23 is placed on top of a larger surface plate 24 which forms a substantially flat surface, although it will be appreciated that the plate 23 is not essential and that the wheels 22 could run on the top of the surface plate 24. The hub base plate 23 has a circular track for the wheels 22. The surface plate 24 is substantially circular and has a diameter greater than that of the turntable. Substantially circular grooves are provided on the upper surface of the surface plate 24 to form a track for the wheels 26. If the ground on which the turntable is to be used is substantially flat then the plates 23 and 24 can be dispensed with.

In an alternative embodiment, the wheels are not fitted to the hub, rather they are carried at the upper ends of support shafts attached to the underneath plate 23 or 24. It will be appreciated that the hub wheels 22 and platform section wheels 26 could be replaced by any component that allows rotation, e.g. rollers, cam followers, ball and sockets, wearing strips, or any other aid to slide and drive.

Rotation of the turntable may be achieved manually using a hand wheel drive. Alternatively, a 110 volt motor having a suitable drive connection to the axle 11 could drive the turntable. A pneumatic or hydraulic arrangement could also be used instead of an electric motor. A large sprocket, a pulley, a V-belt or similar means of drive could be fitted to the perimeter of the hub. Alternatively, the turntable may be rotated using drive provided by the wheels of a vehicle on the tracks 16. Rollers (not shown) on the tracks would then transmit the drive from the vehicle wheels to a gearbox, belt or chain to turn the axle 11.

A locking mechanism may also be provided to prevent rotation of the turntable. This can help prevent theft of a vehicle by rotating it 90° between two obstacles to attempt to prevent it from being driven off the turntable.

The ramp 14 is frustro-conical in shape and is fitted around the perimeter of the surface plate 23 to assist in loading of vehicles onto the turntable. In the example shown the ramp is formed of four segments. However, it will be understood that one or any practical number of segments can be used to form the ramp 14. A portion towards the end of the outer edge of a platform segment 12 is angled downwards to fit underneath the ramp 14. The end of the outer edges of the segment 12 then depends vertically so that it is perpendicular with respect to the platform surface. Wheels 26 are connected to the vertical ends of the segment by means of a horizontal axle. The wheels 26 can be fitted to a hinge mechanism, which means that connections between some of the segments 12 may not be needed.

In an alternative embodiment, the ramp 14 is not connected to the surface plate 24; rather it is a structure formed of one or more sections which depend at an angle from the outer edges of the platform segments 12.

In yet another embodiment, the segments 12 include a groove into which the vehicle tracks 16 are set. This has the effect of lowering the profile of the turntable and so the ramp 14 is not always necessary, or it too can have a correspondingly lower profile. It is also possible to mount the turntable on springs (e.g. fitted on the hub 10) so that it can pivot when a vehicle starts to drive onto it.

Figure 3 shows how the hub 10 can be connected to the segments 12 by means of joints 30. The joint 30 permits some swivel and hinge movement and may consist of a ball joint, clearance holes, slots, self aligning bearings, a bush, a slot arrangement or any other suitable connection. The joint 30 is preferably situated as close as possible to the centre of gravity of the section 12.

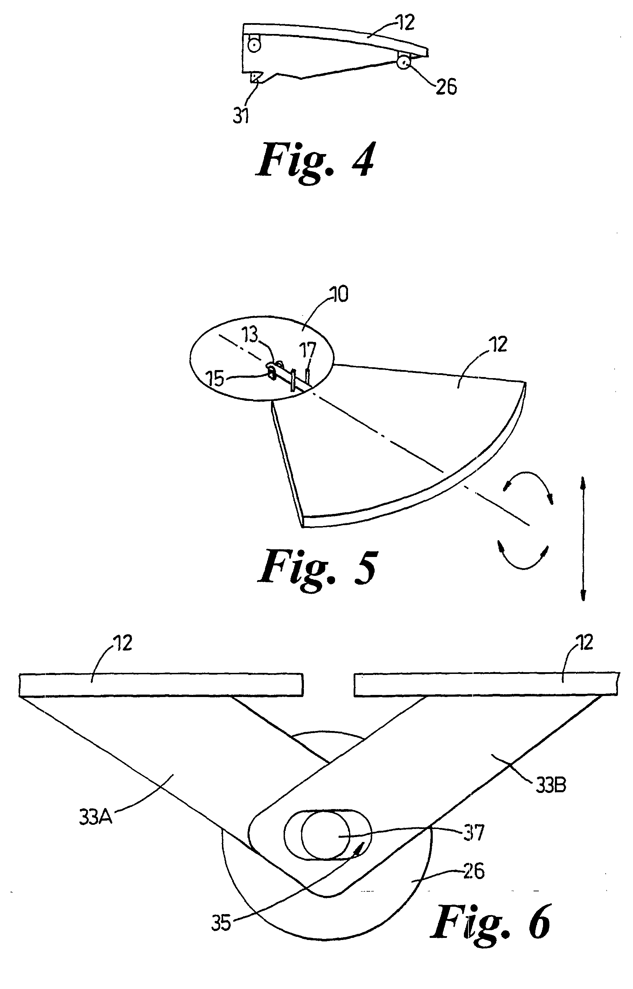

The joint 30 fits through an aperture in a protrusion 31 (shown in Figure 4) on the inner edge of a platform segment 12. In the embodiment of Figure 4, each platform segment is fitted with two wheels located respectively at the two corners at the outer edge of the segment.

As will be appreciated by the person skilled in the art, the load on a platform section 12 will be transmitted to the joint 30 (the connection to the hub) and the two wheels 26. Thus, each platform section distributes its load by means of a three-point contact, which prevents excessive stress being applied to the hub.

As an alternative to the embodiment shown in Figure 4, each platform section may only have a single wheel located towards its outer edge. In such a case, the connection between the segment and its adjacent segment, the wheel and the connection between the hub and the segment form the three-point contact. Furthermore, each segment could be connected to both its adjacent segments. In yet another alternative embodiment, a flexible connection such as a hinge is present between each segment and one or both of its adjacent segments. In such a case, a wheel can be fitted on the hinge between the segments. The connectors between the segments can be straps, chains or other flexible arrangements.

Figure 5 shows another way in which the segments 12 can be connected to the hub 10. For ease of illustration, only one segment is shown, although it will be appreciated that similar arrangements can be provided for all or some of the other segments forming the turntable. A rod 13 runs beneath the hub 10 and the segment 12. One end of the rod is connected to near the centre of the lower surface of the hub by a universal ball joint 15 that allows rotation of the rod. A hook/catch arrangement or a clearance hole could be used as an alternative to the universal joint.

The rod 13 extends radially outwards from the hub under the centre of the segment 12 towards the perimeter of the turntable, where it is connected to the underside of the segment 12 by a similar type of clip. Pairs of pins 17 positioned on the lower surface of the hub either side of the rod 13 help keep it in position. Similar pairs of pins can also be provided under the segment 12. The rod 13 helps support the segment 12 when the weight of a vehicle bears down upon it, but allows it to pivot (as shown by the arrows), which makes the turntable surface more flexible. The arrangement also helps prevent adjacent segments touching one another whilst permitting the slight swivelling and upwards/downwards movement. In an alternative embodiment, the rod 13 and connections are fitted on top of the hub 10 and the segment 12.

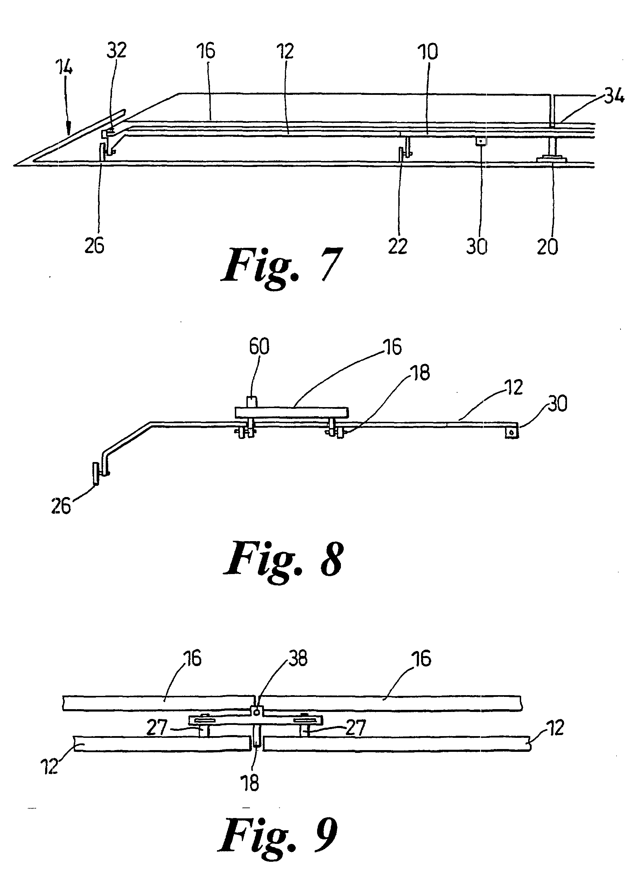

Figure 6 shows an embodiment in which a wheel 26 is connected to two adjacent platform segments 12 by means of two struts 33A, 33B. Each strut depends downward from the lower surface of one segment 12 near the perimeter of the turntable. The two struts are substantially identical flat elongate elements. The strut 33A connected to the lefthand segment 12 in Figure 6 extends downward at an angle of around 45° to the right of the Figure. The strut 33B connected to the right-hand segment extends downward at an angle of around 45° to the left of the Figure and overlaps in front of the lower portion of the strut 33A.

The lower portions of both struts 33A, 33B include substantially identical rectangular slots 35 having rounded sides. An axle 37 connected to the wheel 26 extends through the slots. The slots 35 have a height substantially identical to the diameter of the axle 37, but are of a length approximately twice as long as the diameter. It will be understood that the wheel connected to the axle 37 can be located between or either side of the struts.

This arrangement means that when the weight of a vehicle presses down on the platform segments, the segments can move apart, drawing the struts 33A, 33B in opposite directions. This expansion is limited by the axle 37 coming into contact with the rounded sides of the slots 35. The limiting action of the slots is also an aid for keeping the segment 12 on the centre line provided by the rod 13. In an alternative version, only one of the struts includes the elongate slot, whilst the other has a circular aperture of a diameter substantially equal to that of the axle 37.

As can be seen in Figure 7, the vehicle track 16 is connected to the underside of the perimeter of a platform segments 12 by means of a flexible joint 32. Near the midway point of the turntable, the track 16 is flexibly connected to the segment 12 by means of hinge pin 34. In the embodiment of Figure 8, the end of the segment 12 forming the perimeter of the turntable depends downward and the wheel 26 is connected to the vertical portion of the segment by means of an axle protruding through it.

As can be best seen in Figure 9, the join between the two elongate channels which form the track 16 are connected to the levelling mechanism 18 by means of a hinge pin 38. In the embodiment shown, the levelling mechanism 18 comprises a piece of cross-shaped cross-section with the hinge pin 38 fitted near the upper end of the vertical stem of the cross. The lower end of the vertical stem protrudes through an aperture between two adjacent platform segments 12. The horizontal bar 29 of the cross is located beneath the lower surface of the tracks 16 and above the upper surfaces of the segments 12. The horizontal bar 29 is connected to the top of a corresponding segment at its two ends by means of vertical members 27 that extend upwards from each of the segments.

The hinge pin 38 can be used as part of a drive transmission mechanism (discussed above). In this case, bearings may be provided either side of the pin 38.

The horizontal bar 29 includes slots located near each of its ends. The vertical members 27 have perpendicular protrusions that extend through the slots. This arrangement allows the segments to move horizontally with respect to the levelling mechanism 18, whilst the attached track sections 16 are substantially prevented from moving side to side and backwards or forwards. This helps keep the tracks in a substantially fixed position when a vehicle is driven onto them. The vertical stem of the levelling mechanism 18 protrudes through the gap between the two adjacent segments 12 and allows the wheel track 16 to be positioned substantially centrally between the segments. The levelling mechanism can mean that the wheel tracks 16 do not have to be positioned above segments that are attached to turntable wheels 26, which allows the turntable to have a lower profile.

In an alternative embodiment, the horizontal bar of a T-shaped support is located on the top surface of the segments 12 so that it is positioned between the lower surface of the track 16 and the upper surface of the segments 12. Similar flexible hinges 40 can be used to connect the ends of the support to the segments 12.

The tracks 16 can have stops (not shown) on their upper surfaces to indicate to a driver when the vehicle has reached the correct position for rotation on the turntable. Braking devices (not shown) can also be fitted to the tracks 16 to hold a vehicle in position for security and safety reasons. Each segment 12 can be flexibly connected to its two adjacent segments by means of hinges. It will be understood that the levelling mechanism shown is only one example and other types of arrangements could be used. The mechanism can be modified so that it is located substantially below the segments 12, rather than above them.

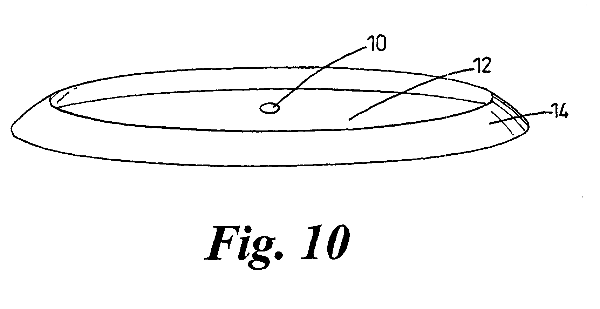

Figure 10 shows a view of the turntable as it appears on the ground surface. In an alternative embodiment, the turntable may be set into a recess in the ground so that the surface formed by the platform is substantially at the same level as the surrounding surface. In this case, there is no need for the ramp 14.

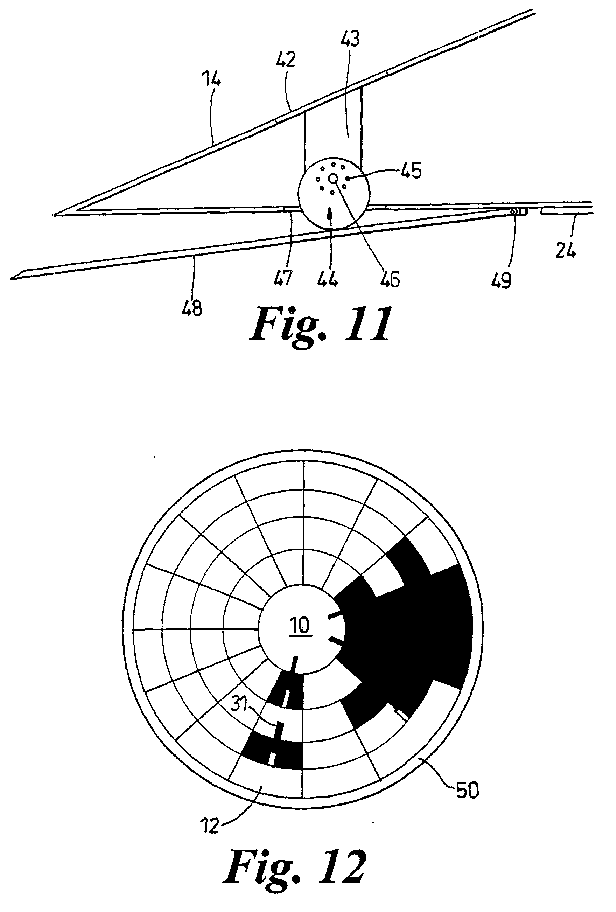

The embodiment of Figure 11 is intended to be used where the surface on which the turntable is placed is particularly uneven. In such situations, the outer perimeter of the turntable may need to be packed or jacked to allow a load to be placed on the turntable. This could be simply achieved by placing sliding wedges, screw jacks, packing or the like underneath appropriate parts of the turntable but a more sophisticated arrangement is shown in Figure 11.

The ramp 14 has a portion which slops upwards and inwards from a base ring placed on the surface plate 24 of the turntable. The sloped portion of the ramp 14 includes an access slot 42 for a bracket 43 which is connected to a cam wheel 44. The cam 44 includes a circular arrangement of drilled holes 45 which are concentric with a pivot 46 of the cam to allow locking pins to be fitted with corresponding holes in the bracket 43. The base portion of the ramp 14 includes a slot 47 through which the cam 44 protrudes to contact a pivot plate 48. The pivot plate 48 is connected to the underside of the base portion of the ramp 14 by a hinge 49.

In order to adjust the level of the ramp the cam 44 is rotated, thereby exerting force on the pivot plate 48. The plate 48 is pushed downwards to an inclined position as shown in Figure 11, thereby lifting the ramp upwards to attempt to bring it level with the surface surrounding the turntable. The cam wheels cam be used in multiples on common hinge plates or individually.

Figure 12 shows a plan view of a further embodiment of the turntable. In this version, single platform segments do not extend from the hub to the perimeter of the platform. Rather, a first ring of platform segments 12 is flexibly connected to and extends radially from the central hub 10 and from that first ring a larger ring of platform segments 12 extends radially. This can be repeated, depending upon the size and flexibility of platform desired, and in the turntable of Figure 12 there are four concentric rings of platform segments. Each platform segment (apart from those in the outermost ring) is flexibly connected to its two adjacent segments. Each platform segment in the outermost ring has two wheels located on its outer edge, similar to that shown in Figure 4.

A ring 50 is fitted around the perimeter of the outermost ring of platform sections to help stabilise the surface. The ring 50 may be formed of a plurality of sections to assist in transportation.

In this embodiment also, each plat:form segment provides a three-point support. The connection between the protrusion 31 of each platform segment with an inner platform segment (or the hub in the case of the innermost segment) being one point and the connections with adjacent segments (or the wheels in the case of the outermost segments) on each side of the outer edge of each segment acting as the other two points. The surface formed by this embodiment is extremely flexible.

Weighing devices or cells (shown as element 60 in Figure 8) could be fitted onto the turntable so that it can be used as a vehicle weighing station. The weighing devices could be attached onto the ends and/or the middle of the tracks 16.

## Claims

1. A turntable including:
a hub (10) for placing on a surface, the hub having a substantially central axle (11) and a plurality of load-bearing and friction-reducing components (26) located under the hub for allowing the hub to rotate above the surface;
a platform formed of a plurality of sections (12) extending radially from the hub, each said section having an inner end edge substantially facing the hub, two sides each lying alongside an adjacent section and an outer end edge remote from the hub, wherein each said inner end edge is flexibly connected to the hub or to an outer end edge of another said platform section, and
loading-bearing and friction-reducing components (26) located under some or all of the platform sections towards the outer end edges thereof for supporting the sections (12) above the surface and allowing the platform to rotate above the surface.

2. A turntable according to Claim 1, wherein some or all of the platform sections (12) are flexibly connected to either or both adjacent sections.

3. A turntable according to Claim 2, wherein the platform sections (12) are flexibly connected to each other by means of hinges.

4. A turntable according to any one of the preceding claims, wherein the platform sections (12) are connected to the hub (10) by means of hinges.

5. A turntable according to any one of the preceding claims further including tracks (16) for guiding wheels of a vehicle on the platform, each said track being fitted on top of the platform on opposite sides of the central hub (10).

6. A turntable according to Claim 5, wherein the tracks are fitted on the platform by means of a levelling mechanism (18).

7. A turntable according to Claim 6, wherein the levelling mechanism comprises a flexible pivot (38) for connecting the track to an elongate support (18), each end of the elongate support having a slot into which a member (27) extending from the platform is slidably fitted.

8. A turntable according to Claim 7, wherein the slots are substantially horizontal and each slot has a member (27) extending from one of an adjacent pair of platform segments slidably fitted within it.

9. A turntable according to any one of the preceding Claims, wherein a load bearing and friction reducing component (26) is connected to a pair of adjacent platform segments (12) by means of struts (33A, 33B) extending from the segments, at least one said strut including a slot (35) through which a connection portion (37) attached to the load bearing and friction reducing component can protrude, the slots having a length greater than the length of the connection portion.

10. A turntable according to Claim 5, wherein the tracks (16) include brakes for holding the vehicle in position.

11. A turntable according to any one of Claims 5 to 10 wherein the track (16) is connected at its two ends to the perimeter of the platform and also substantially midway across the platform.

12. A turntable according to any one of Claims 5 to 11 wherein the track (16) includes stops for the vehicle.

13. A turntable according to any one of the preceding claims further including a ramp (14) for loading the platform.

14. A turntable according to Claim 13, wherein the ramp (14) depends from the outer edges of the turntable.

15. A turntable according to Claim 13, wherein the ramp (14) is angled inwardly towards to the outer edges of the turntable.

16. A turntable according to any one of the preceding claims further including a ring (50) surrounding the perimeter of the platform.

17. A turntable according to Claim 16, wherein the ring (50) is formed of a plurality of curved sections.

18. A turntable according to any one of the preceding claims wherein the load bearing and friction reducing components include wheels (26).

19. A turntable according to Claim 18, wherein each said platform section (12) has two wheels (26), with one said wheel being located towards each side of the outer end edge of the section.

20. A turntable according to Claim 19, wherein the connection with the hub (10) and the two wheels (26) acts as three-point support for distributing a load on the platform section.

21. A turntable according to any one of Claims 18 to 20, further including a substantially circular track for guiding the wheels (26).

22. A turntable according to any one of the preceding claims further including a locking component to prevent rotation of the turntable.

23. A turntable according to any one of the preceding claims further including a mechanism for rotating the turntable.

24. A turntable according to Claim 23, wherein the rotating mechanism is driven by a hand wheel drive or a motor.

25. A turntable according to Claim 23, wherein the rotating mechanism is driven by the rotation of wheels of a vehicle on the turntable.

26. A turntable according to any one of the preceding claims wherein the axle of the hub (10) comprises a central stub shaft (11).

27. A turntable according to any one of the preceding claims, further including a device (60) for weighing a vehicle located on the platform.

## Patentansprüche

1. Drehscheibe folgendes umfassend:
eine Nabe (10) zum Platzieren auf einer Oberfläche, wobei die Nabe eine im wesentlichen zentrale Achse (11) aufweist und sich eine Mehrzahl von lastaufnehmenden und reibungsreduzierenden Komponenten (26) unter der Nabe befindet, um der Nabe es zu gestatten, sich auf der Oberfläche zu drehen;
eine Plattform, die aus einer Mehrzahl von Abschnitten (12) gebildet ist, welche sich radial von der Nabe ausgehend erstrecken, wobei jeder der Abschnitte eine innere Endkante besitzt, die im wesentlichen der Nabe zugewandt ist, zwei Seiten, die jeweils entlang eines benachbarten Abschnittes liegen sowie eine äußere Endkante, die von der Nabe entfernt ist, wobei jede der inneren Endkanten flexibel an die Nabe angeschlossen ist oder an eine äußere Endkante eines weiteren Plattformabschnittes und
lastaufnehmende und reibungsreduzierende Komponenten (26), die sich unter einigen oder allen Plattformabschnitten befinden in Richtung auf ihre äußeren Endkanten zum Abstützen der Abschnitte (12) auf der Oberfläche und um es der Plattform zu gestatten, sich auf der Oberfläche zu drehen.

2. Drehscheibe gemäß Anspruch 1, wobei einige oder alle Plattformabschnitte (12) flexibel an einen oder beide benachbarte Abschnitte angeschlossen sind.

3. Drehscheibe gemäß Anspruch 2, wobei die Plattformabschnitte (12) flexibel aneinander über Gelenke angeschlossen sind.

4. Drehscheibe gemäß einem der vorangehenden Ansprüche, wobei die Plattformabschnitte (12) an die Nabe (10) über Gelenke angeschlossen sind.

5. Drehscheibe gemäß einem der vorangehenden Ansprüche darüber hinaus umfassend Schienen (16) zum Führen von Rädern eines Fahrzeuges auf der Plattform, wobei jede der Schienen oben auf der Plattform aufeinander gegenüberliegenden Seiten der zentralen Nabe (10) befestigt ist.

6. Drehscheibe gemäß Anspruch 5, wobei die Schienen auf der Plattform mit Hilfe eines Ausgleichsmechanismus (18) befestigt sind.

7. Drehscheibe gemäß Anspruch 6, wobei der Ausgleichsmechanismus einen flexiblen Schwenkstift (38) umfasst zum Verbinden der Schiene an einer länglichen Abstützung (18), wobei jedes Ende der länglichen Abstützung einen Schlitz trägt, in welchen ein Element (27), welches von der Plattform ausgeht verschiebbar eingreift.

8. Drehscheibe gemäß Anspruch 7, wobei die Schlitze im wesentlichen horizontal verlaufen und jeder Schlitz ein Element (27) besitzt, welches sich von einem eines benachbarten Paares von Plattformsegmenten ausgehend erstreckt und hierin gleitend aufgenommen ist.

9. Drehscheibe gemäß einem der vorangehenden Ansprüche, wobei eine lastaufnehmende und reibungsreduzierende Komponente (26) an ein Paar benachbarter Plattformsegmente (12) mit Hilfe von Streben (33A, 33B) angeschlossen ist, die sich von den Segmenten ausgehend erstrecken, und mindestens eine der Streben einen Schlitz (35) aufweist, durch welche sich ein Verbindungsteil (37), der an die lastaufnehmende und reibungsreduzierende Komponente angeschlossen ist, hindurch zu erstrecken vermag, wobei die Schlitze eine Länge besitzen, die größer ist als die Länge des Verbindungsteils.

10. Drehscheibe gemäß Anspruch 5, wobei die Schienen (16) Bremsen umfassen, um das Fahrzeug in seiner Position zu halten.

11. Drehscheibe gemäß einem der Ansprüche 5 bis 10, wobei die Schiene (16) mit ihren beiden Enden an den Umfang der Plattform angeschlossen sind, wie auch im wesentlichen halbwegs über die Plattform.

12. Drehscheibe gemäß einem der Ansprüche 5 bis 11, wobei die Schiene (16) Anschläge für das Fahrzeug umfasst.

13. Drehscheibe gemäß einem der vorangehenden Ansprüche darüber hinaus umfassend eine Rampe (14) zum Beladen der Plattform.

14. Drehscheibe gemäß Anspruch 13, wobei die Rampe (14) von den äußeren Kanten der Drehscheibe herabhängt.

15. Drehscheibe gemäß Anspruch 13, wobei die Rampe (14) nach innen abgewinkelt ist in Richtung auf die äußeren Kanten der Drehscheibe.

16. Drehscheibe gemäß einem der vorangehenden Ansprüche darüber hinaus umfassend einen Ring (50), der den Umfang der Plattform umgibt.

17. Drehscheibe gemäß Anspruch 16, wobei der Ring (50) gebildet wird durch eine Mehrzahl gekrümmter Abschnitte.

18. Drehscheibe gemäß einem der vorangehenden Ansprüche, wobei die lastaufnehmenden und reibungsreduzierenden Komponenten Räder (26) umfassen.

19. Drehscheibe gemäß Anspruch 18, wobei jeder Plattformabschnitt (12) zwei Räder (26) trägt, wobei eines der Räder sich in Richtung auf jede Seite der äußeren Endkante des Abschnittes befindet.

20. Drehscheibe gemäß Anspruch 19, wobei der Anschluss mit der Nabe (10) und den beiden Rädern (26) als Dreipunktabstützung wirkt zur Verteilung der Last auf den Plattformabschnitt.

21. Drehscheibe gemäß einem der Ansprüche 18 bis 20 darüber hinaus umfassend eine im wesentlichen kreisförmige Schiene zum Führen der Räder (26).

22. Drehscheibe gemäß einem der vorangehenden Ansprüche darüber hinaus umfassend eine Verriegelungskomponente zum Verhindern der Drehung der Drehscheibe.

23. Drehscheibe gemäß einem der vorangehenden Ansprüche darüber hinaus umfassend einen Mechanismus zum Drehen der Drehscheibe.

24. Drehscheibe gemäß Anspruch 23, wobei der Drehmechanismus von einem Handradantrieb oder einem Motor angetrieben ist.

25. Drehscheibe gemäß Anspruch 23, wobei der Drehmechanismus angetrieben wird durch die Rotation der Räder eines Fahrzeuges auf der Drehscheibe.

26. Drehscheibe gemäß einem der vorangehenden Ansprüche, wobei die Achse der Nabe (10) einen zentralen Stummelschaft (11) umfasst.

27. Drehscheibe gemäß einem der vorangehenden Ansprüche darüber hinaus umfassend eine Einrichtung (60) zum Wiegen eines sich auf der Plattform befindenden Fahrzeuges.

## Revendications

1. Plaque tournante comprenant :
- un moyeu (10) destiné à être placé sur une surface, le moyeu ayant un axe (11) sensiblement central et une pluralité de composants (26) de support de charge et de réduction de frottement situés sous le moyeu pour permettre au moyeu de tourner au-dessus de la surface ;
- une plate-forme formée d'une pluralité de sections (12) s'étendant radialement à partir moyeu, chaque section précitée ayant une bordure d'extrémité interne tournée faisant sensiblement face au moyeu, deux côtés s'étendant chacun le long d'une section adjacente et une bordure d'extrémité externe éloignée du moyeu, chaque bordure d'extrémité interne précitée étant connectée de façon flexible au moyeu ou à une bordure d'extrémité externe d'une autre section de plate-forme précitée ; et
- les composants (26) de support de charge et de réduction de frottement étant situés sous une partie ou la totalité des sections de plate-forme vers les bordures d'extrémité externes de celles-ci pour supporter les sections (12) au-dessus de la surface et permettre à la plate-forme de tourner au-dessus de la surface.

2. Plaque tournante selon la revendication 1, dans laquelle une partie ou la totalité des sections de plate-forme (12) sont connectées de façon flexible à l'une ou l'autre des sections adjacentes ou aux deux.

3. Plaque tournante selon la revendication 2, dans laquelle les sections de plate-forme (12) sont connectées de façon flexible l'une à l'autre au moyen d'articulations.

4. Plaque tournante selon l'une quelconque des revendications précédentes, dans laquelle les sections de plate-forme (12) sont connectées au moyeu (10) au moyen d'articulations.

5. Plaque tournante selon l'une quelconque des revendications précédentes, comprenant en outre des pistes (16) pour guider les roues d'un véhicule sur la plate-forme, chaque piste précitée étant adaptée sur la partie supérieure de la plate-forme sur des côtés opposés du moyeu central (10).

6. Plaque tournante selon la revendication 5, dans laquelle les pistes sont adaptées sur la plate-forme au moyen d'un mécanisme de mise à niveau (18).

7. Plaque tournante selon la revendication 6, dans laquelle le mécanisme de mise à niveau comprend un pivot flexible (38) pour connecter la piste à un support allongé (18), chaque extrémité du support allongé ayant une fente dans laquelle un élément (27) s'étendant à partir de la plate-forme est adapté de façon coulissante.

8. Plaque tournante selon la revendication 7, dans laquelle les fentes sont sensiblement horizontales et chaque fente présente un élément (27) s'étendant à partir de l'un d'une paire adjacente de segments de plate-forme adapté de façon coulissante à l'intérieur de celle-ci.

9. Plaque tournante selon l'une quelconque des revendications précédentes, dans laquelle un composant (26) de support de charge et de réduction de frottement est connecté à une paire de segments de plate-forme adjacents (12) au moyen d'étais (33A, 33B) s'étendant à partir des segments, au moins l'un desdits étais comprenant une fente (35) à travers laquelle une partie de connexion (37) attachée au composant de support de charge et de réduction de frottement peut faire saillie, les fentes ayant une longueur supérieure à la longueur de la partie de connexion.

10. Plaque tournante selon la revendication 5, dans laquelle les pistes (16) comprennent des freins pour maintenir le véhicule en position.

11. Plaque tournante selon l'une quelconque des revendications 5 à 10, dans laquelle la piste (16) est connectée à ses deux extrémités au périmètre de la plate-forme et également sensiblement à mi-chemin à travers la plate-forme.

12. Plaque tournante selon l'une quelconque des revendications 5 à 11, dans laquelle la piste (16) comprend des butées pour le véhicule.

13. Plaque tournante selon l'une quelconque des revendications précédentes, comprenant en outre une rampe (14) pour le chargement de la plate-forme.

14. Plaque tournante selon la revendication 13, dans laquelle la rampe (14) est suspendue aux bordures extérieures de la plaque tournante.

15. Plaque tournante selon la revendication 13, dans laquelle la rampe (14) est inclinée vers l'intérieur en direction des bordures externes de la plaque tournante.

16. Plaque tournante selon l'une quelconque des revendications précédentes, comprenant en outre un anneau (50) entourant le périmètre de la plate-forme.

17. Plaque tournante selon la revendication 16, dans laquelle l'anneau (50) est formé d'une pluralité de sections incurvées.

18. Plaque tournante selon l'une quelconque des revendications précédentes, dans laquelle les composants de support de charge et de réduction de frottement comprennent des roues (26).

19. Plaque tournante selon la revendication 18, dans laquelle chaque section de plate-forme précitée (12) présente deux roues (26), avec une roue précitée qui est située vers chaque côté de la bordure d'extrémité externe de la section.

20. Plaque tournante selon la revendication 19, dans laquelle la connexion avec le moyeu (10) et les deux roues (26) agit comme support à trois points pour distribuer une charge sur la section de plate-forme.

21. Plaque tournante selon l'une quelconque des revendications 18 à 20, comprenant en outre une piste sensiblement circulaire pour guider les roues (26).

22. Plaque tournante selon l'une quelconque des revendications précédentes, comprenant en outre un composant de verrouillage pour empêcher la rotation de la plaque tournante.

23. Plaque tournante selon l'une quelconque des revendications précédentes, comprenant en outre un mécanisme pour faire tourner la plaque tournante.

24. Plaque tournante selon la revendication 23, dans laquelle le mécanisme tournant est entraîné par une commande par volant ou un moteur.

25. Plaque tournante selon la revendication 23, dans laquelle le mécanisme tournant est entraîné par la rotation de roues d'un véhicule sur la plaque tournante.

26. Plaque tournante selon l'une quelconque des revendications précédentes, dans laquelle l'axe du moyeu (10) comprend un faux arbre central (11).

27. Plaque tournante selon l'une quelconque des revendications précédentes, comprenant en outre un dispositif (60) pour peser un véhicule situé sur la plate-forme.
